# EUROPEAN PATENT APPLICATION

(11) **EP 1 158 788 A1**
(43) Date of publication of application: **28.11.2001**
(21) Application number: 00970028.7
(22) Date of filing: 24.10.2000
(51) Int. Cl.: H04N 5/265, H04N 5/45, H04N 7/15, H04N 7/18

(54) **PICTURE GENERATING DEVICE, PICTURE GENERATING METHOD AND COMMUNICATION DEVICE WITH PICTURE GENERATING DEVICE**

(30) Priority: 29.10.1999 JP 30955599
(71) Applicant: MATSUSHITA ELECTRIC INDUSTRIAL CO., LTD., Kadoma-shi, Osaka 571-8501 (JP)
(72) Inventor: Machida, Yutaka, Yokohama-shi, Kanagawa 233-0004 (JP); Yukitake, Takeshi, Yokohama-shi, Kanagawa 241-0817 (JP); Miyauchi, Motoya, Tokyo 168-0082 (JP); Kubota, Kosuke, Yokosuka-shi, Kanagawa 239-0828 (JP); Kayada, Tadashi, Yokohama-shi, Kanagawa 236-0042 (JP)
(74) Representative: Grünecker, Kinkeldey, Stockmair & Schwanhäusser Anwaltssozietät
(86) International application number: JP0007421
(87) International publication number: WO0133835

(57) **Abstract**

Screen control means 106 determines a priority order, a magnification or reduction rate, and an image synthesis position. Image selection means 101 selects a plurality of input images in conformity with the priority order, and image processing means 102 magnifies or reduces the selected images in proportion to the magnification or reduction rate. Movement detection means 103 detects stationary parts of images to be processed in the image processing means 102, and frequency analysis means 104 detects featureless parts of the images to be processed in the image processing means 102. Adapted image synthesis means 105 synthesizes the magnified or reduced images at an image synthesis position designated by the movement detection means 103 and the frequency analysis means 104. Thereby, even if an image of an object to be displayed is added besides an opposite station image and a self image, the images can effectively be synthesized and displayed. Even if the resolution of a display apparatus is changed, an image generation apparatus can flexibly cope with the change. And, it can be prevented that a child screen hides an important part of a parent screen from sight.

## Description

### Technical Field

The present invention relates to an image generation apparatus and an image generation method that are applied to a communication apparatus such as an image apparatus in a television conference system, a stationary type cable visual telephone unit, a portable visual telephone unit in a mobile communication system, and an information terminal apparatus having a personal computer function, and more particularly to an image generation apparatus and an image generation method that synthesizes a plurality of dynamic picture images or static images on one screen.

### Background Art

A conventional image generation apparatus and a conventional image generation method are disclosed in Japanese Laid-Open Patent Publication HEI 6-30335. Moreover, as a conventional image generation apparatus which is mounted on a communication apparatus, for example, a picture-in-picture generation apparatus in a television conference system can be cited. The picture-in-picture generation apparatus is an apparatus for synthesizing a self image photographed with a camera of a self station into an opposite station image that is being received.

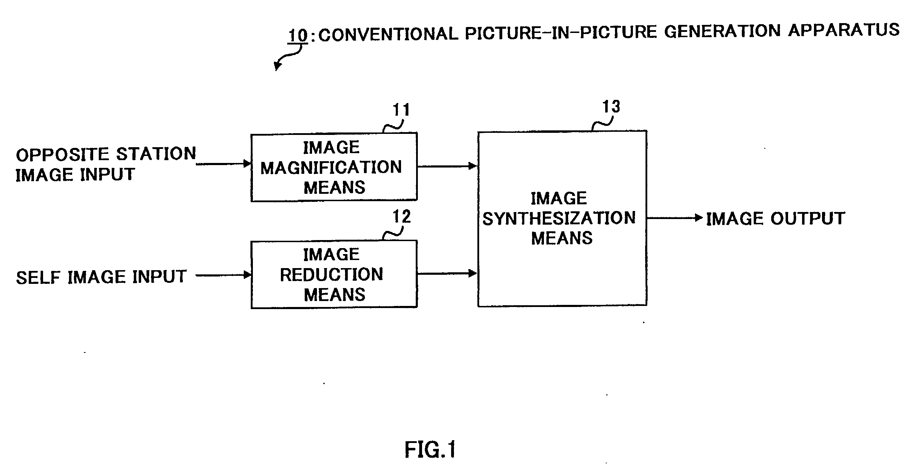

FIG. 1 is a block diagram showing the configuration of a picture-in-picture generation apparatus being a conventional image generation apparatus.

The picture-in-picture generation apparatus 10 shown in FIG. 1 is configured by comprising image magnification means 11, image reduction means 12 and image synthesis means 13.

The image magnification means 11 performs the magnification processing of an opposite station image at a predetermined fixed magnification and outputs the magnified image. For example, the image magnification means 11 magnifies an opposite station image composed of 352 × 288 pixels to a magnified image composed of 704 x 480 pixels. The image reduction means 12 performs the reduction processing of a self image at a predetermined fixed magnification and outputs the reduced image. For example, the image reduction means 12 reduces a self image composed of 352 × 288 pixels to a reduced image composed of 176 × 144 pixels. The image synthesis means 13 performs the overlay processing of a self image output from the image reduction means 12 to a specific position of an opposite station image output from the image magnification means 11, and the image synthesis means 13 outputs the processed image.

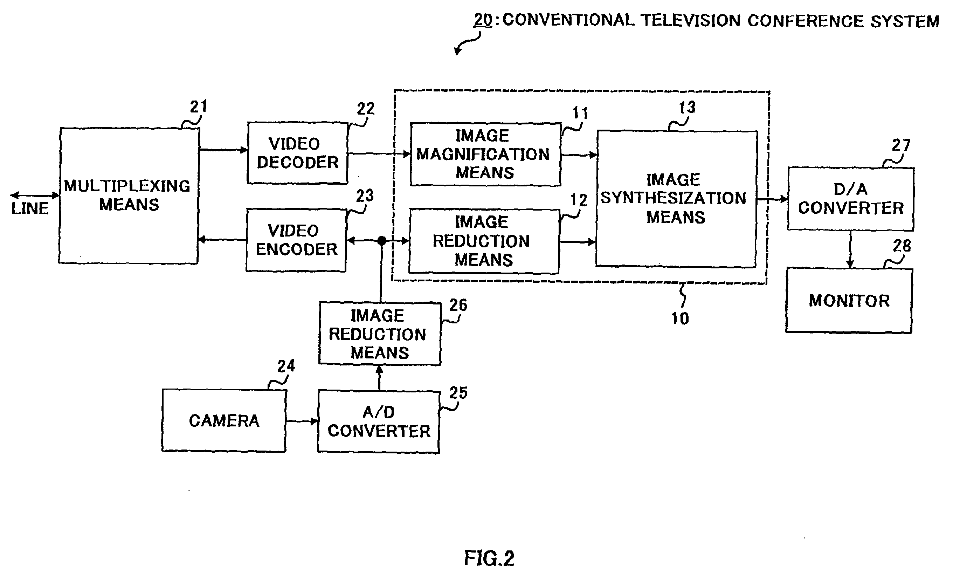

Next, a television conference system using the picture-in-picture generation apparatus 10 of such a configuration is described with the aid of the block diagram of FIG. 2.

The television conference system 20 shown in FIG. 2 comprises the image magnification means 11, the image reduction means 12 and the image synthesis means 13 of the picture-in-picture generation apparatus 10 shown in FIG. 1. Moreover, the television conference system 20 is configured by comprising a multiplexing means 21, a video decoder 22, a video encoder 23, a camera 24, an A/D converter 25, an image reduction means 26, a D/A converter 27, and a monitor 28.

The multiplexing means 21 multiplexes a transmission signal to a line such as a telephone line and a dedicated line and a reception signal from the line. The video decoder 22 decodes a dynamic picture image bit stream received from the line to reconstruct an opposite station image. The video encoder 23 codes a self image to transmit the coded image to the line.

The camera 24 photographs a self image. The A/D converter 25 converts an analog self image signal from the camera 24 to a digital self image signal. The image reduction means 26 performs the reduction processing of a digital self image signal at a predetermined fixed magnification to output the reduced self image signal. For example, the image reduction means 26 reduces a digital self image signal of 704 × 480 pixels to a digital self image signal of 352 288 pixels.

The D/A converter 27 converts a digital image signal after synthesis to an analog signal. The monitor 28 displays an analog image signal after synthesis.

In the television conference system 20 of such a configuration, after a self image photographed with the camera 24 is output as an analog signal, the self image is converted to a digital signal by the A/D converter 25. And then, the digital self image is input into the image reduction means 26.

The image reduction means 26 reduces a digital self image signal for adjusting the image size of the self image signal to the dynamic coding format of the video encoder 23. For example, the image reduction means reduces a digital self image signal composed of 704 × 480 pixels to a digital self image signal of 352 × 288 pixels.

The video encoder 23 codes the reduced digital self image signal to output the coded self image signal to the multiplexing means 21. Then, the multiplexing means 21 transmits the coded self image to the line.

Moreover, the digital self image signal output from the image reduction means 26 is also input into the image reduction means 12, and the self image signal is further reduced by the image reduction means 12. For example, the reduction is a transformation from 352 × 288 pixels to 176 × 144 pixels. Thereby, a child screen that is overlaid on a parent screen is generated.

On the other hand, a dynamic picture image bit stream received from an opposite station through the line is input into the video decoder 22 through the multiplexing means 21. The video decoder 22 generates an opposite station image by decoding the dynamic picture image bit stream.

Ordinarily, the video encoder 23 and the video decoder 22 are configured such that they performs encoding and decoding, respectively, on the basis of the same dynamic image coding format, and the opposite station image generated by the video decoder 22 is also composed of 352 × 288 pixels.

Moreover, the opposite station image output from the video decoder 22 is input into the image magnification means 11, and is magnified by the image magnification means 11. For example, the magnification is a transformation from 352 × 288 pixels to 704 × 480 pixels . Thereby, a parent screen is generated.

Next, the image synthesis means 13 performs the overlay processing of the self image being a child screen at a specific position, e.g. at the lower right, of the opposite station image being a parent screen, and the image synthesis means 13 outputs the overlaid image. That is, for example, a self image composed of 176 × 144 pixels is synthesized with an opposite station image composed of 704 × 480 pixels such that the self image hides a part of the opposite station image from sight, and then the image is output.

An output from the image synthesis means 13 is converted to an analog signal by the D/A converter 27, and then is displayed on the monitor 28.

Because, while the image of a speaker of an opposite station is received and displayed, a self image can be displayed on the same monitor 28 with the aid of the picture-in-picture generation apparatus 10 applied to the television conference system 20 in such a way, a television conference can be performed while ascertaining always whether a desired self image could be transmitted or not.

However, the conventional image generation apparatus has a problem such that it is difficult to add images of objects to be displayed besides an opposite station image and a self image to be effectively synthesized and displayed.

This is because an effective display area of a parent screen becomes narrow when all of the images of objects to be displayed are simply displayed by being synthesized in a picture-in-picture way. This particularly becomes a problem in the case where the resolution of the monitor 28 is low or the display surface of the monitor 28 is physically small.

Moreover, the conventional image generation apparatus has a problem such that it is difficult to cope with a case where the resolution of the monitor 28 is changed flexibly because the magnification rate of an opposite station image being a parent screen, the reduction rate of a self image being a child screen and an overlay position are fixed.

Moreover, the conventional image generation apparatus has a problem such that a child screen hides an important image part of a parent screen from sight.

### Disclosure of Invention

An object of the present invention is to provide an image generation apparatus and an image generation method that can effectively display images even if an image of an object to be displayed is added besides an opposite station image and a self image, and that can flexibly cope with a case where the resolution of a display apparatus is changed, and further that can prevent that a child screen hides an important image part of a parent screen from sight.

The object can be attained by the following procedures: selecting an image of an object to be displayed according to a prescribed priority order, controlling the magnification rate, the reduction rate and the synthesis position of the image of the object to be displayed, and performing the overlay processing of each image at a position not being significant in point of space and time.

### Brief Description of Drawings

FIG. 1 is a block diagram showing the configuration of a picture-in-picture generation apparatus being a conventional image generation apparatus;
FIG. 2 is a block diagram showing the configuration of a television conference system using a conventional picture-in-picture generation apparatus;
FIG. 3 is a block diagram showing the configuration of an image generation apparatus according to Embodiment 1 of the present invention; and
FIG. 4 is a block diagram showing the configuration of a communication apparatus using an image generation apparatus according to Embodiment 2 of the present invention.

### Best Mode for Carrying Out the Invention

Hereinafter, the embodiments of the present invention are described with the aid of the attached drawings.

### (EMBODIMENT 1)

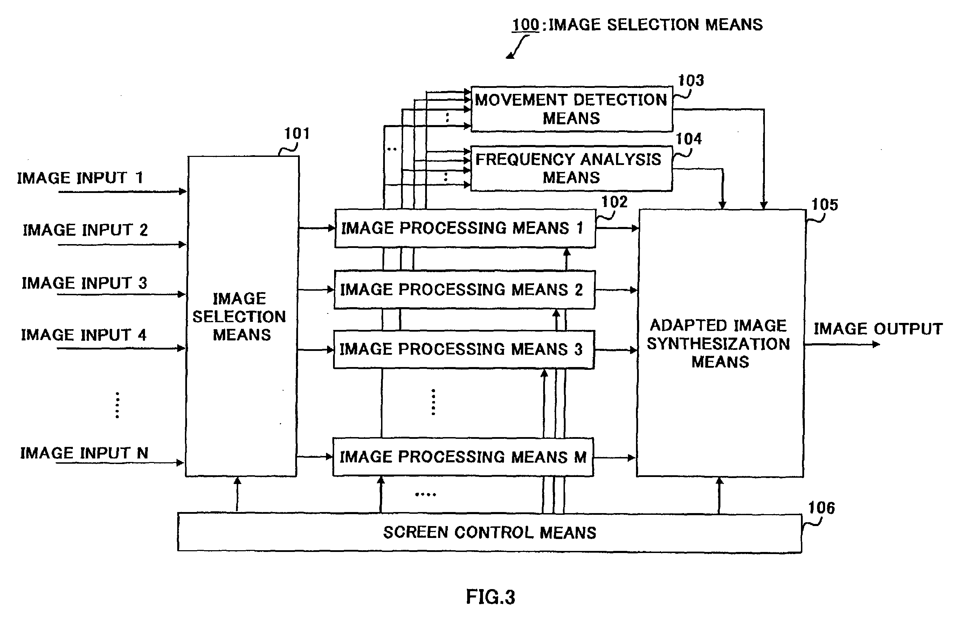

FIG. 3 is a block diagram showing the configuration of an image generation apparatus according to Embodiment 1 of the present invention.

The image generation apparatus 100 shown in FIG. 3 is configured by comprising image selection means 101, a plurality of (from a first to an Mth) image processing means 102, movement detection means 103, frequency analysis means 104, adapted image synthesis means 105 and screen control means 106.

The image selection means 101 selects and outputs images among a plurality of input images from 1 to N in conformity with a prescribed priority order. The image processing means 102 perform the magnification processing or the reduction processing of every image output from the image selection means 101 in proportion to magnification rates and reduction rates that are given from the screen control means 106. The movement detection means 103 detects stationary parts of the images processed by the image processing means 102, and designates an image synthesis position to the adapted image synthesis means 105. The frequency analysis means 104 detects featureless parts of the images processed by the image processing means 102, and designates an image synthesis position to the adapted image synthesis means 105.

The adapted image synthesis means 105 synthesizes the images that have been processed by the image processing means 102 to the image synthesis positions designated by the movement detection means 103 and the frequency analysis means 104. The screen control means 106 designates the priority order of images to the image selection means 101, and designates the magnification rates and the reduction rates of the images to the image processing means 102 in proportion to the shape, the resolution and other properties of a not shown display apparatus. And further, the screen control means 106 designates an image synthesis position to the adapted image synthesis means 105 according to the shape, the resolution and other properties of the display apparatus.

In such a configuration, the image selection means 101 selects and outputs a prescribed number of images among the input images from ones having higher priority orders in conformity with the priority order given by the screen control means 106. The number of the images to be output is determined by the screen control means 106 according to the resolution and the shape of the display apparatus.

Next, the selected images are severally input into the image processing means 102. The image processing means 102 performs the magnification processing or the reduction processing of each image in proportion to magnification rates and reduction rates given by the screen control means 106.

Incidentally, the screen control means 106 determines the magnification rate and the reduction rate of each image on the basis of at least the following two factors. One of them is the resolution and the shape of a display apparatus, and the other of them is the assortment of a parent screen and a child screen based on the priority order of images. Here, if functions such as trimming, mapping, rotation and inversion are added to the image processing means 102 besides the magnification processing or the reduction processing, the more flexible generation of images can be realized.

Furthermore, each image that has been magnified or reduced by the image processing means 102 is input into the adapted image synthesis means 105. The adapted image synthesis means 105 determines the synthesis position and the hierarchy structure of each input image according to the information given by any of or all of the screen control means 106, the movement detection means 103 and the frequency analysis means 104.

The synthesis position information of each image according to the resolution and the shape of a display apparatus and the hierarchy structure information based on the priority order of each image are given to the adapted image synthesis means 105 from the screen control means 106.

The movement detection means 103 detects the movement of each image, and gives the synthesis position information of each image to the adapted image synthesis means 105 in order that a stationary part is processed by the overlay processing. The movement vector detection processing of dynamic picture image coding may be utilized for the detection of the movement, or other method may be utilized for the detection of the movement.

The frequency analysis means 104 gives the synthesis position information of each image to the adapted image synthesis means 105 by performing the frequency analysis of each image such that a part that is not judged to be a featured point on the reason that the spatial activity of each image at the part is low is processed by the overlay processing. The discrete cosine transformation of dynamic picture image coding may be used for the frequency analysis, or the wavelet transformation or any other means may be used for the frequency analysis.

As described above, because images of objects to be displayed are selected according to a prescribed priority order by the image generation apparatus 100 of Embodiment 1, a plurality of images of objects to be displayed can effectively be synthesized and displayed.

In particular, if the resolution of a display apparatus is low, or if the display surface of a display apparatus is physically small, the images of objects to be displayed can effectively be synthesized and displayed by the limitation of the number of images to be selected to the minimum (e.g. two).

Moreover, because the magnification rates, the reduction rates, and the synthesis positions of images of objects to be displayed can be changed, the image generation apparatus 100 can flexibly cope with display apparatus having various resolutions.

Moreover, because the image generation apparatus 100 is configured in order that each image is processed by the overlay processing at a position that is not significant in point of space and time, it does not happen that an important part of an image is hided by another image from sight.

### (EMBODIMENT 2)

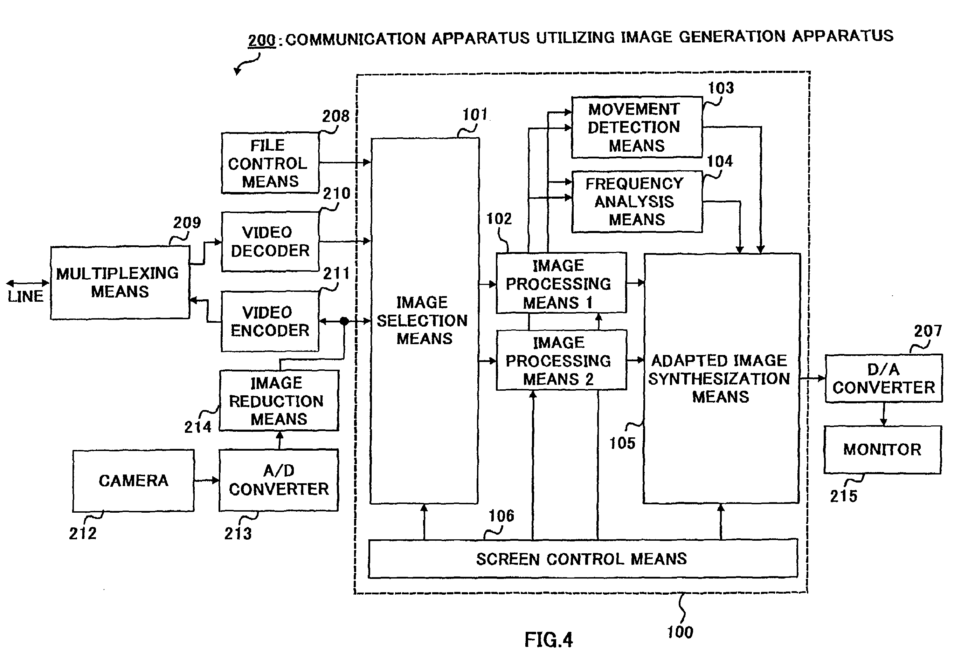

FIG. 4 is a block diagram showing the configuration of a communication apparatus utilizing the image generation apparatus 100 shown in FIG. 3. Incidentally, the following description is given to a case where inputs to the image selection means 101 are three series (file images, opposite station images, and self images ) and outputs from the image selection means 101 are two series (parent screens and child screens).

The communication apparatus 200 shown in FIG. 4 is configured by comprising a D/A converter 207, a file control means 208, a multiplexing means 209, a video decoder 210, a video encoder 211, a camera 212, an A/D converter 213, an image reduction means 214 and a monitor 215 besides the configuration elements of the image generation apparatus 100 that have been described concerning

### Embodiment 1.

The multiplexing means 209 multiplexes a transmission signal to a line such as a telephone line and a dedicated line and a reception signal from the line. The video decoder 210 decodes a dynamic picture image bit stream received from the line through the multiplexing means 209 to reconstruct an opposite station image. The video encoder 211 codes a self image to transmit the coded image to the line.

The camera 212 photographs a self image. The A/D converter 213 converts an analog self image signal from the camera 212 to a digital self image signal. The image reduction means 214 performs the reduction processing of a digital self image signal in conformity with a dynamic image coding format.

The file control means 208 outputs a dynamic image or a static image stored in a file to the image selection means 101.

The D/A converter 207 converts a digital image signal that has been synthesized by the adapted image synthesis means 105 to an analog signal. The monitor 215 displays an image signal after synthesis from the D/A converter 207.

Next, the operation of the communication apparatus 200 is described. Incidentally, in the following descriptions, the following are supposed. That is, a priority order is given by the screen control means 106 in the order of a file image, an opposite station image, and a self image, and the resolution of each image is 352 × 288 pixels, and the resolution of the monitor 215 is 704 × 480 pixels.

At first, in the ordinary communication state, only an opposite station image being an output of the video decoder 210, and a self image being an input from the camera 212 are input into the image selection means 101. In this case, the image selection means 101 outputs the input two series of images as they are.

Next, in the image processing means 102, the magnification processing to 704 × 480 pixels is performed according to the magnification rate of images from the screen control means 106 in order to make an opposite station image having a high priority a parent screen. On the other hand, in the image processing means 102, the reduction processing to 176 × 144 pixels is performed according to the reduction rate of images from the screen control means 106 in order to make a self image having a low priority order a child screen.

Moreover, the adapted image synthesis means 105 performs the processing of disposing an opposite station image at the center of 704 × 480 pixels on the basis of priority order information. Consequently, the opposite station image is displayed on the whole surface of the monitor 215 as a parent image.

Likewise, the adapted image synthesis means 105 disposes a self image consisting of 176 × 144 pixels at the lower right part of the 704 × 480 pixels as a child image on the basis of the priority order information, and the adapted image synthesis means 205 performs the overlay processing of the self image on the opposite station image.

Thereby, at the ordinary communication, the small self image is synthesized and displayed as if the self image is fitted at the lower right part of the opposite station image.

Next, the description is given to a case where a static image is input into the image selection means 101 from the file control means 208 during the aforesaid communication.

In this case, the image selection means 101 selects and outputs a file image and an opposite station image according to the priority order.

Next, in the image processing means 102, the magnification processing to 704 × 480 pixels is performed in order to make a file image having a high priority order a parent screen. On the other hand, in the image processing means 102, the reduction processing to 176 × 144 pixels is performed in order to make an opposite station image having a low priority order a child screen.

Furthermore, the adapted image synthesis means 105 performs the processing of disposing a file image at the center of 704 × 480 pixels on the basis of the priority order information. Consequently, the file image is displayed on the whole surface of the monitor 215 as a parent image.

Likewise, the adapted image synthesis means 105 disposes an opposite station image consisting of 176 × 144 pixels at the lower right part of the 704 × 480 pixels as a child image on the basis of the priority order information, and the adapted image synthesis means 105 performs the overlay processing of the opposite station image on the file image.

Thus, when a file image is input into the image selection means 101 at the time of communication, the small opposite station image is synthesized and displayed as if the opposite station image is fitted at the lower right part of the file image.

As described above, according to the communication apparatus 200 of Embodiment 2, because the image selection means 101 selects a plurality of images of objects to be displayed in conformity with a prescribed priority order and outputs the images after the selection, even if an image of an object to be displayed is added besides an opposite station image and a self image, the images can effectively be synthesized and displayed.

Moreover, because the screen control means 106 controls the image processing means 102 and the adapted image synthesis means 105 according to the shape and the resolution of the monitor 215, the communication apparatus 200 flexibly cope with a case where the resolution of the monitor 215 is changed.

Moreover, because a child screen is disposed at a position where a parent screen is not significant by the movement detection means 103 and the frequency analysis means 104, it can be prevented that the child screen hides an important part of the parent screen from sight.

Incidentally, an example in which the image generation apparatus 100 is used in the communication apparatus 200 is described in Embodiment 2. However, the present invention is not limited to the example. The image generation apparatus 100 may also be applied to an image apparatus in a television conference system, a stationary type cable visual telephone unit, a portable visual telephone unit in a mobile communication system, an information terminal apparatus having a personal computer function, and other equipment.

Moreover, a case where a static image is input into the image selection means 101 from the file control means 208 is described in Embodiment 2. However, the communication apparatus 200 may be configured such that a dynamic image is input into the image selection means 101 from the file control means 208. Furthermore, the communication apparatus 200 may be configured such that the file control means 208 is equipped with a video decoder or a static image decoder for inputting a dynamic image bit stream or a static image bit stream, both being stored in a file, into the image selection means 101 after decoding them.

As apparent from the above description, according to the present invention, if an image of an object to be displayed is added besides an opposite station image and a self image, the images can effectively be synthesized and displayed. Even if the resolution of the display apparatus is changed, the present invention can flexibly cope with the change, and it can be prevented that a child screen hides an important part of a parent screen from sight.

This application is based on the Japanese Patent Application No. HEI 11-309555 filed on October 29, 1999, entire content of which is expressly incorporated by reference herein.

### Industrial Applicability

The present invention is suitable for being applied to a communication apparatus such as an image apparatus in a television conference system, a stationary type cable visual telephone unit, a portable visual telephone unit in a mobile communication system, and an information terminal apparatus having a personal computer function.

## Claims

1. An image generation apparatus comprising:
control means for designating a priority order and a magnification or reduction rate of each image;
selection means for selecting a plurality of input images in conformity with the priority order;
image processing means for magnifying or reducing the selected images in proportion to the magnification or reduction rate;
synthesis means for synthesizing the magnified or reduced images; and
display means for displaying an image synthesized by said synthesis means.

2. The image generation apparatus according to claim 1, wherein said control means determines the priority order according to a hierarchy structure of images to display.

3. The image generation apparatus according to claim 1, wherein said control means determines the priority order according to whether an image belongs to a parent screen that is displayed on the whole display means or a child screen that is incorporated in the parent screen as a part thereof.

4. The image generation apparatus according to claim 1, wherein said control means determines the magnification or reduction rate according to a screen shape or a resolution of said display means.

5. The image generation apparatus according to claim 1, wherein said control means determines the magnification or reduction rate according to in which of a parent screen and a child screen corresponding to the priority order an image is displayed.

6. The image generation apparatus according to claim 1, wherein:
said control means determines a number of images according to a screen shape or a resolution of said display means, and
said selection means selects the images as many as the number of images determined by said control means.

7. The image generation apparatus according to claim 1, wherein:
said control means designates an image synthesis position according to a screen shape or a resolution of said display means, and
said synthesis means determines a position where the images magnified or reduced according to the image synthesis position are synthesized or displayed on said display means.

8. The image generation apparatus according to claim 1, wherein:
said control means designates hierarchy structure information corresponding to the priority order, and
said synthesis means determines a hierarchy in which the images magnified or reduced are synthesized and displayed on said display means according to the hierarchy structure information.

9. The image generation apparatus according to claim 1, said apparatus further comprising movement detection means for detecting movements of the images that have processed by said image processing means to output movement information to said synthesis means, wherein
said synthesis means disposes the plural images on a basis of the movement information lest moving parts of the plural images should overlap each other.

10. The image generation apparatus according to claim 1, said apparatus further comprising frequency analysis means for analyzing frequency components of the images processed by said image processing means to output frequency information to said synthesis means, wherein
said synthesis means disposes the plural images on a basis of the frequency information lest featured parts of the plural images should overlap each other.

11. The image generation apparatus according to claim 1, wherein said image processing means has at least a magnification/reduction function, a trimming function, a mapping function, a rotation function, and an inversion function as image processing.

12. A communication apparatus equipped with an image generation apparatus, said image generation apparatus comprising:
control means for designating a priority order and a magnification or reduction rate of each image;
selection means for selecting a plurality of input images in conformity with the priority order;
image processing means for magnifying or reducing the selected images in proportion to the magnification or the reduction rate;
synthesis means for synthesizing the magnified or reduced images; and
display means for displaying an image synthesized by said synthesis means.

13. An image generation method comprising the steps of:
selecting a plurality of input images in conformity with a priority order;
magnifying or reducing the selected images respectively; and
synthesizing the magnified or the reduced images.
